# EUROPÄISCHE PATENTSCHRIFT

(11) **EP 2 308 708 B1**
(45) Veröffentlichungstag und Bekanntmachung des Hinweises auf die Patenterteilung: **17.08.2016**
(21) Anmeldenummer: 09170400.7
(22) Anmeldetag: 16.09.2009
(51) Int. Cl.: B60K 6/46, B62M 3/00, F16D 1/10, F16F 1/376, B60K 6/24, B60K 6/38

(54) **Elektrofahrzeug mit Reichweitenverlängerung**
Electric vehicle with range extension
Véhicule électrique doté d'un allongement du rayon d'action

(43) Veröffentlichungstag der Anmeldung: 13.04.2011
(73) Patentinhaber: swissauto powersport llc, 3400 Burgdorf (CH)
(72) Erfinder: Wenger Urs, 4539 Rumisberg (CH); Jenni Hans-Rudolf, 3365 Grasswil (CH); Zoller Manuel, 9425 Thal (CH); Baumgartner Marc, 9462 Montlingen (CH)
(74) Vertreter: AMMANN PATENTANWÄLTE AG BERN

(56) Entgegenhaltungen:
- EP-A1- 0 856 427
- DE-A1- 4 447 138
- DE-A1- 19 735 021
- DE-A1-102005 003 077

## Beschreibung

Die vorliegende Erfindung bezieht sich auf ein Elektrofahrzeug mit Reichweitenverlängerung mit angekoppeltem Verbrennungsmotor, wobei es sich gemäss EU-Richtlinien um ein serielles Hybrid-Elektrofahrzeug handelt.

Bei diesem Typ Hybridfahrzeug, auch Elektrofahrzeug mit Range Extender genannt, wird ein Verbrennungsmotor mit einer Elektromaschine als Generator gekoppelt. Der Verbrennungsmotor gibt seine Leistung an den Generator ab, welcher die Drehbewegung in elektrische Energie umsetzt und entweder die Batterie oder den elektrischen Fahrmotor des Fahrzeugs versorgt. Auf diese Weise kann der Verbrennungsmotor in allen Betriebspunkten auf einem sehr guten Wirkungsgrad betrieben werden, was die CO₂-Emissionen und den Treibstoffverbrauch der Aggregate positiv beeinflusst.

Ein kritischer Faktor von solchen Aggregaten ist die Ankopplung des Verbrennungsmotors an den Generator, da durch die hohe Verbrennungskraft des Motors grosse Drehungleichheiten und Verformungen an der Kurbelwelle wirken. Um allgemein einen Generator an den Verbrennungsmotor zu koppeln sind heute verschiedene Lösungen bekannt, wobei die Bauart des Generator eine wesentliche Rolle spielt. Bei den vorbekannten Lösungen, z. B. gemäss der DE 197 35 021 A1 oder DE 10 2007 024 126 A1 handelt es sich um Anwendungen in sogenannten parallelhybriden Fahrzeugen, die ein aufwändiges Kupplungssystem aufweisen, wobei Kupplungsteile axial gekoppelt sind.

In der DE 44 47 138 A1 ist ein serieller Hybridantrieb offenbart, der einen Generator mit daran angeschlossener Batterie aufweist. Als zusätzliche Energiequelle des Generators dient ein Freiflug-Kolbenmotor, der mittels einer Kolbenstange und eines Pleuels eine Kurbelwelle antreibt, welche mit dem Rotor des Generators drehfest verbunden ist.

Von diesem Stand der Technik ausgehend ist es eine Aufgabe der Erfindung ein serielles Hybridelektrofahrzeug anzugeben, bei dem die Verbindung zwischen dem Verbrennungsmotor und dem Generator sehr genau ausgerichtet und verwindungssteif ausgebildet ist, jedoch sowohl Gewichtsersparnis als auch eine einfache Montage ermöglicht. Diese Aufgabe wird mit dem Fahrzeug gemäss Anspruch 1 gelöst.

Eine weitere Aufgabe ist es, im Falle von Temperaturschwankungen einen effizienten Längenausgleich der Generatorwelle und der Kurbelwelle zu ermöglichen. Diese Aufgabe wird mit dem Fahrzeug gemäss Anspruch 5 gelöst.

Die Erfindung wird im Folgenden anhand von Zeichnungen eines Ausführungsbeispiels näher erläutert.
- Fig. 1: zeigt eine erfindungsgemässe Anordnung einer elektrischen Maschine mit einem angekoppelten Verbrennungsmotor,
- Fig. 2: zeigt eine Ausschnittvergrösserung aus Fig. 1,
- Fig. 3: zeigt in einer perspektivischen Darstellung die Kurbelwelle des Verbrennungsmotors, und
- Fig. 4: zeigt schematisch die Lagerung der Wellen.

Es gibt verschiedene Bauarten, um den Verbrennungsmotor mit dem Generator zu verbinden, zum Beispiel
Bauart 1: Kompletter Generator mit einer eigenständigen Lagerung der Rotorwelle in einem Generatorengehäuse, wie in den Zeichnungen dargestellt, oder Bauart 2: Der Scheibengenerator wird direkt und ohne Lagerung auf das Motorengehäuse bzw. auf die Kurbelwelle gebaut. In der vorliegenden Erfindung wird nur Bauart 1 berücksichtigt.

Bei der vorliegenden Bauart gemäss den Zeichnungen eignet sich der Generator für den Anbau an unterschiedliche Motoren, wobei die Ankopplung im Prinzip über eine beliebige Verbindung der Wellen und der Gehäuse erfolgen kann. Motor und Generator sind eigenständig und werden über ein Bindeglied verbunden. Für einen Einzylinder-Motor mit einer sehr kurzen Kurbelwelle erweist sich diese Bauart als die sinnvollste Lösung, da auf Grund der separaten Lagerung des Rotors des Generators der Luftspalt im Generator klein gehalten werden kann, um einen hohen Wirkungsgrad erzielen zu können. Die Biegemomente in der Kurbelwelle bei der Verbrennung, sowie die Lagerspiele auf die kurze Distanz zwischen den Lagern können bei geeigneter Anordnung von der Generatorlagerung aufgenommen werden, womit ein Berühren von Rotor und Gehäuse verhindert wird.

Je nach Bauart und Stabilität der Wellenverbindung zwischen Verbrennungsmotor und Generator kann der Generator dem Verbrennungsmotor als Schwungmasse dienen, was aber aufgrund der auftretenden Momente nicht unproblematisch ist, jedoch bei vorliegender Lösung gelöst wird.

Es sind verschiedene Lösungen für die Verbindung der Generator- mit der Kurbelwelle denkbar, so z. B.
1) Eine Elastomerkupplung, diese jedoch
   benötigt axial wie radial sehr viel Platz, Toleranzen müssen gross gewählt werden,
   kann die geforderten dynamischen schwellenden Drehmomente nicht aufnehmen, ansonsten viel zu gross,
   der Generator kann nicht als Schwungmasse des Motors dienen, der Motor braucht zusätzliche Schwungmasse = Kosten / Gewicht.
2) Verbindung der Wellen über einen Konus:
   Steife Verbindung, braucht aber Platz in der Länge und im Durchmesser, um genügend Steifigkeit zu erlangen,
   axiale Toleranzen sind problematisch, da bei der Montage die Einbauposition durch das Anzugsmoment nicht genau bestimmt werden kann,
   Montage und Demontage schwierig.
3) Innenverzahnung:
   Aufwändig in der Herstellung,
   die auftretenden Momente provozieren ein mechanisches Spiel und Laufgeräusche, falls eine Schiebetoleranz verwendet wird,
   Montage und Demontage problematisch bei Pressverbindungen,
   Montagelänge / Platzbedarf sind relativ gross.
4) Hirthverzahnung:
   Geringer Platzbedarf in axialer und radialer Richtung,
   exakte Ausdistanzierung mit kleinen Toleranzen,
   einfache Montage,
   absolut spielfreie Verbindung,
   vollständig Drehsteif, da vorgespannt und formschlüssig,
   geringes Gewicht,
   kostengünstig, da keine zusätzlichen Elemente notwendig, und
   hohe Präzision, guter Rundlauf, Selbstzentrierung,

Ausgehend von obiger Charakterisierung der vier Verbindungs-Beispiele folgt, dass die selbstzentrierende Axialverbindung, auch Hirth-Verzahnung genannt, die besten Voraussetzungen bringt.

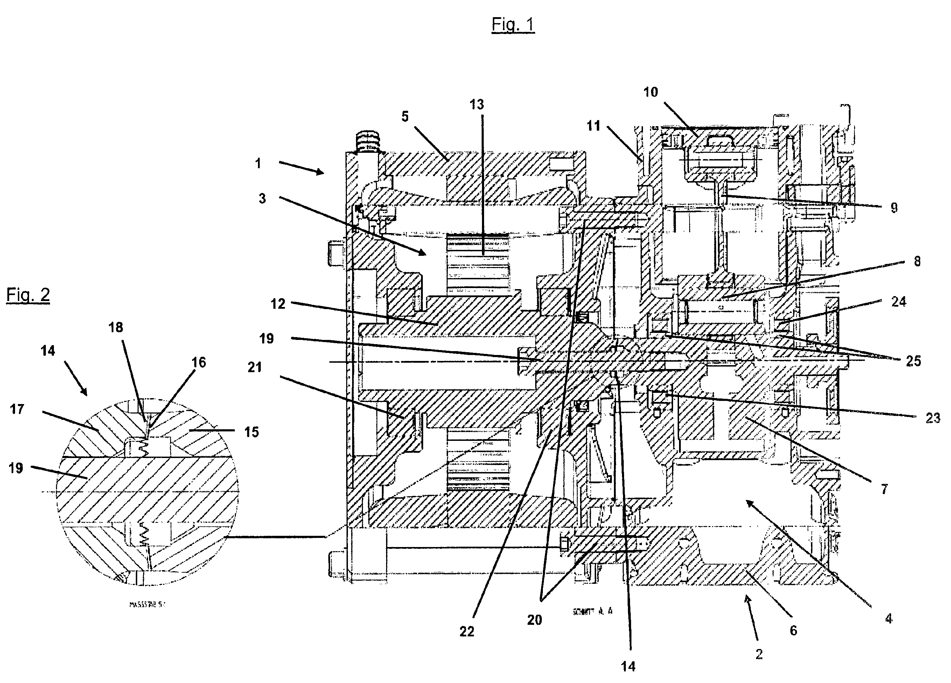

In Fig. 1, die einen Schnitt durch eine elektrische Maschine 1 mit angekoppelten Einzylindermotor 2 zeigt, ist links der Generator 3 des Range Extenders und rechts der Motorblock 4 des Verbrennungsmotors, hier ein Einzylindermotor, angeordnet. Der Generator 3 befindet sich in einem Generatorgehäuse 5 und der Motorblock befindet sich in einem Motorengehäuse 6.

Vom Verbrennungsmotor ist die Kurbelwelle 7, der Kurbelzapfen 8, der Pleuel 9, der Kolben 10 sowie der Zylinder 11 und vom elektrischen Antrieb die ebenfalls hohle Rotorwelle 12 vom Generator mit dem Generator/Rotor 13 ersichtlich.

Wie aus Fig. 2 hervorgeht, werden die Kurbelwelle 7 und die Rotorwelle 12 über eine selbstzentrierende Verbindung 14 verbunden, wobei an der Kurbelwelle ein Wellenstumpf 15 mit Stirnverzahnung 16 und an der Rotorwelle 12 ein entsprechender Wellenstumpf 17 mit Stirnverzahnung 18 angeordnet sind, wobei diese Art Verzahnung in an sich bekannter Weise selbstzentrierend wirken. Die beiden Wellen werden durch eine Verbindungsschraube 19 und die beiden Gehäuse 5 und 6 werden mittels Schrauben 20 ohne Zentrierung miteinander verbunden, da die Hirth-Verzahnung die Zentrierung übernimmt.

Als vorteilhafte Konsequenz einer solchen Verbindung ergibt sich eine grosse Vereinfachung der Lagerung der beiden Wellen, die einen einfachen Längenausgleich der Wellen bei Temperaturschwankungen ermöglicht. Diese Konstruktion benötigt nur ein Festlager 21 in Form eines Kugellagers für die Rotorwelle 12 und ein erstes Loselager 22 als Kugel- oder Rollenlager im Generatorengehäuse oder Innenring sowie ein drittes und viertes Loselager 23 und 24 als Rollenlager ohne Axialanlauf im Motorengehäuse, wobei der Innenring auf der Kurbelwelle gepresst oder die Kurbelwelle direkt als Lauffläche für das Loselager ohne Innenring dient.
Die Loselager 23 und 24 können auch als Kugellager mit einem Schiebesitz im Gehäuse oder auf der Welle ausgeführt werden.

Durch die oben angegebene Anordnung der Aggregate ergeben sich eine ganze Reihe von Vorteilen, wie z. B.
einfache Montage mit nur einer Schraube durch die Hohlwelle des Generator,
einfache Vormontage der beiden Komponenten Verbrennungsmotor und Generator,
die Verbindung ist so ausgelegt, dass die Vorspannkraft der Schraube in jedem Zustand grösser ist als die vom Verbrennungsmotor auftretenden Dreh- und Biegemomente, die auf die Verzahnung wirken, womit eine sehr steife Verbindung ermöglicht wird und die hohe Drehmasse des Generators als Motorschwungmasse verwendet werden kann.

Da die Verzahnung selbstzentrierend ist, entfallen zusätzliche Zentrierungen am Gehäuse. Damit kann eine Überbestimmtheit in der Montage vermieden werden und der Rundlauf und die Fluchtung der beiden Aggregate ist immer gegeben.
in axialer Richtung sind kleine Toleranzen möglich.

Der Montageablauf ist der Folgende: Zuerst wird die Wellenverbindung und anschliessend werden die Gehäuse zusammengeschraubt.

Durch die hohe Präzision der Hirthverzahnung in axialer Richtung besteht die Möglichkeit, den gesamten Wellenverbund lediglich mit einem Axiallager zu fixieren, durch die die bekannten Probleme bezüglich Längenausdehnungen infolge Temperatureinflüsse eliminiert werden können.

Da der Generator aufgrund der Effizienz der Wicklungen und der Permanentmagnete sehr sensibel auf die Laufspiele sowohl in radialer als auch in axialer Richtung reagiert und sich bei grossen Spielen der Wirkungsgrad drastisch verschlechtert, wäre es ideal, wenn der Generator genau ausdistanziert werden kann, und die gesamte Längenausdehnung am Verbrennungsmotor trotz der steifen Verbindung aufgenommen und ausgeglichen werden kann. Die axiale Distanzierung am Generator ist wichtig, da die Drehzahl- und Positionserfassung des Generators über einen stirnseitig angebrachten Decoder / Drehgeber abgenommen wird. Dieser Decoder vermag aufgrund seiner Bauweise keine grossen axialen Distanzen zu überwinden. Die axiale Ausrichtung von Generatorgehäuse und -Welle wird somit vorzugsweise auf der Seite des Decoders gemacht.

Der Verbrennungsmotor kann aus diesem Grund so konzipiert werden, dass er im Kurbeltrieb die gesamte Längenausdehnung des Wellenverbundes aufnehmen kann. Kurbelwelle und Pleuel haben in axialer Richtung genügend Spiel, um die Ausdehnung aufzunehmen. Das Axiallager am Motor entfällt. Die Kurbelwelle und der Pleuel haben lediglich einen Anlauf zur Begrenzung in axialer Richtung, welcher nur im Vormontagezustand des Motors ohne den Generator benutzt wird.

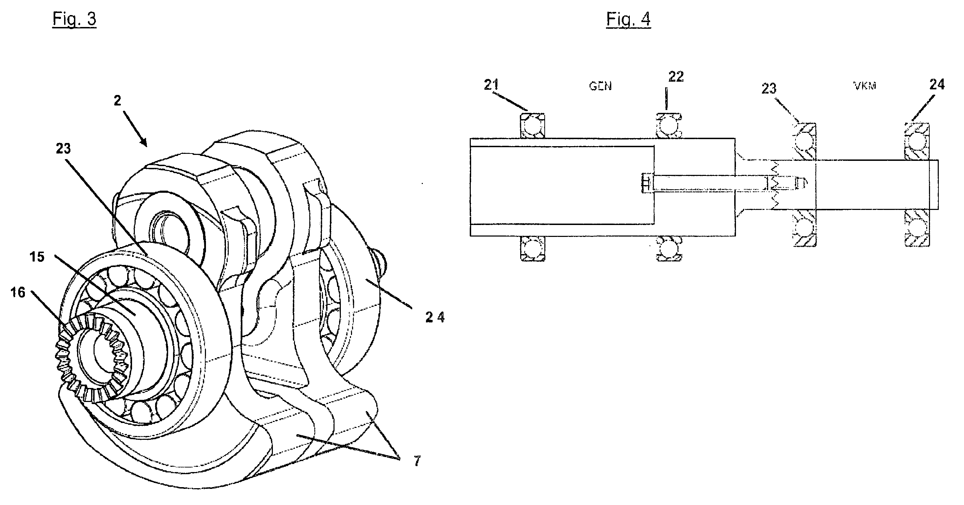

Sobald Motor und Generator gekoppelt werden, übernimmt der Generator die axiale Ausrichtung. Die Lager am Motor können wie in Fig. 4 mit Kugellager als Loselager ausgeführt werden, oder aber mit Rollenlager oder Tonnenlager.

Der Pleuel weist auf dem Kolbenbolzen genügend Spiel auf, um die axiale Ausdehnung aufnehmen zu können. Der Pleuel ist unten zwischen den Kurbelwangen geführt.

Auf diese Weise entsteht ein kompakter Verbund der Aggregate, wobei der Generator mit seiner grossen Drehmasse als Schwungrad am Verbrennungsmotor benutzt wird, womit eine erhebliche Gewichtseinsparung und eine Bauraum-Optimierung erzielt werden können.

## Patentansprüche

1. Serielles Hybrid-Elektrofahrzeug mit angekoppeltem Verbrennungsmotor, welcher der Reichweitenvergrösserung dient, **dadurch gekennzeichnet, dass** der Verbrennungsmotor (2) mittels einer selbstzentrierenden Stirnverzahnung (16, 18) an den Generator (13) des Reichweitenverlängerers angekoppelt ist.

2. Elektrofahrzeug nach Anspruch 1, **dadurch gekennzeichnet, dass** die Kurbelwelle (7) des Verbrennungsmotors und die Rotorwelle (12) des Generators je einen Wellenstumpf (15, 17) aufweisen, der mit einer einander entsprechenden Stirnverzahnung (16, 18) versehen ist.

3. Elektrofahrzeug nach Anspruch 1 oder 2, **dadurch gekennzeichnet, dass** die beiden hohlen Wellen (7, 12) durch eine Verbindungsschraube (19) miteinander verbunden sind.

4. Elektrofahrzeug nach einem der Ansprüche 1 bis 3, **dadurch gekennzeichnet, dass** der Generator (13) als Schwungmasse des Verbrennungsmotors dient.

5. Elektrofahrzeug nach einem der Ansprüche 1 bis 4, **dadurch gekennzeichnet, dass** sich ein Festlager (21) und ein erstes Loselager (22) auf der Generatorseite befinden und die Lager der Motorenseite als Loselager (23, 24) ausgebildet sind, um die Längenausdehnungen der Wellen durch Temperartureinfluss aufnehmen zu können.

6. Elektrofahrzeug nach einem der Ansprüche 1 bis 5, **dadurch gekennzeichnet, dass** das Festlager (21) auf der Generatorseite als Kugellager ausgeführt ist.

7. Elektrofahrzeug nach einem der Ansprüche 1 bis 5, **dadurch gekennzeichnet, dass** die Loselager (22, 23, 24) am Generator und am Motor als Rollenlager mit einem Innenring (25) ausgeführt sind.

8. Elektrofahrzeug nach einem der Ansprüche 1 bis 5, **dadurch gekennzeichnet, dass** die Loselager (22, 23, 24) am Generator und am Motor als Rollenlager ausgeführt sind, wobei aufgrund von Bauraumoptimierung und Wellen-Dimensionierung der Innenring entfällt und die Wellen direkt als Lagerfläche dienen.

9. Elektrofahrzeug nach einem der Ansprüche 1 bis 5, **dadurch gekennzeichnet, dass** die Loselager (22, 23, 24) am Generator und am Motor als Kugellager ausgeführt sind, wobei entweder der Lager-Innen- oder -Aussenring mit einer Schiebeverbindung eingebaut ist.

10. Elektrofahrzeug nach einem der Ansprüche 1 bis 9, **dadurch gekennzeichnet, dass** der Verbrennungsmotor ein Ein- oder Zweizylindermotor ist.

## Claims

1. Series hybrid electric vehicle having a coupled internal combustion engine that serves for range extension, **characterised in that** the internal combustion engine (2) is coupled to the generator (13) of the range extender by means of a self-centring face gear (16, 18).

2. Electric vehicle according to claim 1, **characterised in that** the crankshaft (7) of the internal combustion engine and the rotor shaft (12) of the generator each have shaft ends (15, 17) that are provided with matching face gears (16, 18).

3. Electric vehicle according to claim 1 or 2, **characterised in that** the two hollow shafts (7, 12) are connected to each other by a connecting screw (19).

4. Electric vehicle according to one of claims 1 to 3, **characterised in that** the generator (13) serves as the flywheel mass of the internal combustion engine.

5. Electric vehicle according to one of claims 1 to 4, **characterised in that** a fixed bearing (21) and a first floating bearing (22) are provided on the generator side and the bearings on the engine side are in the form of floating bearings (23, 24) so as to be able to accommodate the linear expansion of the shafts due to temperature influence.

6. Electric vehicle according to one of claims 1 to 5, **characterised in that** the fixed bearing (21) on the generator side is in the form of a ball bearing.

7. Electric vehicle according to one of claims 1 to 5, **characterised in that** the floating bearings (22, 23, 24) on the generator and on the engine are in the form of roller bearings with inner rings (25).

8. Electric vehicle according to one of claims 1 to 5, **characterised in that** the floating bearings (22, 23, 24) on the generator and on the engine are in the form of roller bearings whose inner rings are omitted as a result of construction space optimization und shaft dimensioning while the shafts directly serve as bearing surfaces.

9. Electric vehicle according to one of claims 1 to 5, **characterised in that** the floating bearings (22, 23, 24) on the generator and on the engine are in the form of ball bearings, either the inner or the outer bearing ring being slidably mounted.

10. Electric vehicle according to one of claims 1 to 9, **characterised in that** the internal combustion engine is a single-cylinder or a twin engine.

## Revendications

1. Véhicule électrique hybride série ayant un moteur à combustion interne accouplé qui sert à la prolongation de l'autonomie, **caractérisé en ce que** le moteur à combustion interne (2) est accouplé au générateur (13) du prolongateur d'autonomie au moyen d'une denture frontale (16, 18) à auto-centrage.

2. Véhicule électrique selon la revendication 1, **caractérisé en ce que** le vilebrequin (7) du moteur à combustion interne et l'arbre rotor (12) du générateur ont des bouts d'arbre (15, 17) munis de dentures frontales (16, 18) réciproquement correspondantes.

3. Véhicule électrique selon la revendication 1 ou 2, **caractérisé en ce que** les deux arbres creux (7, 12) sont reliés par une vis de connexion (19).

4. Véhicule électrique selon l'une des revendications 1 à 3, **caractérisé en ce que** le générateur (13) sert de masse d'inertie du moteur à combustion interne.

5. Véhicule électrique selon l'une des revendications 1 à 4, **caractérisé en ce qu'**un palier fixe (21) et un premier palier flottant (22) se trouvent du côté du générateur et que les paliers du côté du moteur sont réalisés sous la forme de paliers flottants (23, 24) afin de pouvoir absorber les dilatations linéaires des arbres dues à l'influence de la température.

6. Véhicule électrique selon l'une des revendications 1 à 5, **caractérisé en ce que** le palier fixe (21) du côté du générateur est réalisé sous la forme d'un roulement à billes.

7. Véhicule électrique selon l'une des revendications 1 à 5, **caractérisé en ce que** les paliers flottants (22, 23, 24) sur le générateur et sur le moteur sont réalisés sous la forme de roulements à rouleaux avec bague intérieure (25).

8. Véhicule électrique selon l'une des revendications 1 à 5, caractérisé en ce les paliers flottants (22, 23, 24) sur le générateur et sur le moteur sont réalisés sous la forme de roulements à rouleaux, la bague intérieure étant omise en raison d'une optimisation de l'espace de construction et des dimensions des arbres, et les arbres servant directement de surfaces de palier.

9. Véhicule électrique selon l'une des revendications 1 à 5, **caractérisé en ce que** les paliers flottants (22, 23, 24) sur le générateur et sur le moteur sont réalisés sous la forme de roulements à billes dont soit la bague intérieure, soit la bague extérieure est montée glissante.

10. Véhicule électrique selon l'une des revendications 1 à 9, **caractérisé en ce que** le moteur à combustion interne est un moteur à un ou à deux cylindres.
